# FASCICULE DE BREVET EUROPEEN

(11) **EP 3 987 207 B1**
(45) Date de publication et mention de la délivrance du brevet: **10.04.2024**
(21) Numéro de dépôt: 20734032.4
(22) Date de dépôt: 24.06.2020
(51) Int. Cl.: F16L 1/15, F16L 1/19, F16L 1/23

(54) **PROCÉDÉ DE POSE OU/ET DE RÉCUPÉRATION D'UNE LIGNE DANS UNE ÉTENDUE D'EAU COMPORTANT UNE PHASE D'IMMOBILISATION CONTRÔLÉE**
VERFAHREN ZUM VERLEGEN UND/ODER ZURÜCKHOLEN EINER LEITUNG IN EINEM GEWÄSSER, MIT EINER PHASE DER GESTEUERTEN IMMOBILISIERUNG
METHOD FOR LAYING AND/OR RECOVERING A LINE IN A BODY OF WATER, COMPRISING A PHASE OF CONTROLLED IMMOBILIZATION

(30) Priorité: 24.06.2019 FR 1906804
(43) Date de publication de la demande: 27.04.2022
(73) Titulaire: TechnipFMC Subsea France, 92400 Courbevoie (FR)
(72) Inventeur: JEAN, Sebastien, 76113 Hautot sur Seine (FR); PIERRE, Martin, 76570 Pavilly (FR)
(74) Mandataire: Lavoix
(86) Numéro de dépôt international: PCT/EP2020/067618
(87) Numéro de publication internationale: WO 2020/260350

(56) Documents cités:
- WO-A1-2007/108673
- WO-A1-2011/141793
- WO-A1-2015/069099

## Description

La présente invention concerne un procédé de pose ou/et de récupération d'une ligne dans une étendue d'eau, selon le préambule de la revendication 1.

WO2015/069099, WO2011/141793 et WO2007/108673 décrivent des procédés de pose de lignes dans une étendue d'eau.

La ligne est par exemple une ligne flexible, notamment une conduite flexible telle que décrite dans les documents normatifs publiés par l'American Petroleum Institute (API), API 17J « Spécification for Unbonded Flexible Pipe » 4ème Edition Mai 2014, et API RP 17B « Recommended Practice for Flexible Pipe » 5ème Edition Mai 2014. La conduite flexible est par exemple une conduite montante (ou «riser» en anglais) et/ou une conduite posée sur le fond marin (ou « flowline » en anglais).

En variante, la conduite flexible est un faisceau composite de type « bundle », comprenant au moins un tube de transport de fluide et un ensemble de câbles électriques ou optiques propres à transporter une puissance électrique ou hydraulique ou une information entre le fond et la surface de l'étendue d'eau.

En variante encore, la ligne flexible est un ombilical sous-marin décrit dans le document normatif API 17E, ou un câble électrique de puissance.

Plus généralement, la ligne posée ou récupérée par le procédé est une conduite rigide telle que décrite dans le document normatif publié par le Det Norske Veritas and Germanischer Lloyd (DNV-GL), DNVGL-ST-F101 « Submarine pipeline systems » Edition 2017.

Pour déployer de telles lignes flexibles, il est connu de les dérouler à partir de moyens de stockage présents sur un système de pose flottant, par exemple décrit dans EP 2 005 050.

Les moyens de stockage sont notamment un panier ou un tambour rotatif.

La ligne est déroulée à partir des moyens de stockage, puis est généralement remontée sur une goulotte portée par la tour du dispositif de pose.

Ensuite, la ligne est engagée dans des ensembles de saisie et de déplacement comprenant des organes de saisie à chenilles. La ligne descend ainsi verticalement ou de manière inclinée le long de la tour, avant de plonger dans l'étendue d'eau.

La ligne est retenue par les organes de saisie en regard qui assurent sa suspension dans l'étendue d'eau. En outre, les organes de saisie en regard supportent la tension mécanique provenant du poids de la ligne déroulée et évitent aux moyens de stockage de subir ce poids, tout en garantissant que la ligne ne subit pas de flexion qui va au-delà de son rayon minimal de courbure en flexion sans endommagement («MBR» ou «Minimal Bending Radius» en anglais).

Pour plonger la ligne dans l'étendue d'eau, un puits vertical est généralement ménagé à travers la coque du navire pour former un passage de descente de la ligne. Un tel puits est désigné par le terme anglais «moon pool».

Plus généralement, la tour du dispositif de pose s'étend verticalement ou de manière inclinée au voisinage de ce puits pour permettre le déploiement de la ligne à travers le passage. En variante, la tour du dispositif de pose est située à l'arrière de la coque. Dans la plupart des cas, le dispositif de pose comporte de haut en bas sur la tour, au moins un premier groupe d'organes de saisie supérieurs et un deuxième groupe d'organes de saisie inférieurs.

Encore en variante, la ligne est posée horizontalement avec des organes de saisie disposés en tandem.

Les opérations de pose d'une ligne flexible dans une étendue d'eau ne s'effectuent pas de manière totalement continue. En effet, il est parfois nécessaire de stopper la pose de la ligne pour effectuer diverses opérations.

Ces opérations incluent par exemple l'installation à intervalles réguliers de bouées autour de la ligne, pour lui donner une configuration en forme de vague.

D'autres opérations incluent des réparations ponctuelles sur la ligne, ou encore des opérations sous-marines en rapport avec la ligne par exemple des connexions/déconnexions, des interventions de véhicules sous-marins téléguidés.

L'arrêt de la pose peut aussi résulter d'une mise en attente, liée par exemple à la météo ou/et à des contraintes imposées par des installations pétrolières avoisinantes.

Pour stopper temporairement la pose, les organes de saisie sont équipés de systèmes de freins mécaniques qui bloquent l'axe d'au moins un moteur, sur commande de l'unité de commande. Puis, lorsque la pose peut redémarrer, l'unité de commande désactive les freins mécaniques et réactive les organes de saisie.

Dans un procédé du type précité, lors d'une immobilisation de la ligne après une descente de celle-ci, les contraintes s'appliquant sur les organes de saisie le long de la ligne ne sont pas constantes le long des organes de saisie.

En particulier, les parties inférieures et supérieures des organes de saisie subissent, juste après une immobilisation de la ligne, une contrainte dirigée vers le bas relativement élevée qui résulte de la stabilisation de la ligne sur l'organe de saisie (désignées par le terme anglais « pad landing » ou « pad take off »). Cette contrainte s'oppose à la retenue de la ligne par l'organe de saisie.

Lorsque la ligne est de faible masse, ou au début de la pose d'une ligne de plus grande masse, un tel phénomène n'a pas d'incidence, puisque les organes de saisie sont conçus avec une retenue nominale bien supérieure au poids pendu porté.

Cependant, pour une ligne suspendue de grande longueur, le phénomène précité peut s'avérer problématique lorsque le poids pendu porté par les organes de saisie s'approche de la capacité nominale de retenue des organes de saisie. Dans ce cas, la retenue de la ligne peut s'avérer insuffisante, pouvant conduire, dans des cas critiques, à une chute non contrôlée de la ligne dans l'étendue d'eau.

Il est donc nécessaire de prévoir des marges de sécurité importantes, conduisant généralement à une diminution de la capacité de pose du système, notamment en terme de poids pendu.

Un but de l'invention est donc de fournir un procédé de pose et/ou de remontée d'une ligne flexible qui permette d'assurer la pose d'une ligne flexible en toute sécurité, sans engendrer de baisse notable de la capacité de pose.

A cet effet, l'invention a pour objet un procédé selon la revendication 1.

Le procédé selon l'invention peut comprendre l'une ou plusieurs des caractéristiques des revendications 2 à 8, prise(s) isolément ou suivant toute combinaison techniquement possible.

L'invention sera mieux comprise à la lecture de la description qui va suivre, donnée uniquement à titre d'exemple, et faite en se référant aux dessins annexés, sur lesquels :
[Fig. 1] la figure 1 est une vue schématique d'un premier système de pose et/ou de récupération selon l'invention ;
[Fig. 2] la figure 2 est un schéma synoptique illustrant le dispositif de pose et l'unité de commande du dispositif dans le système de pose et/ou de récupération selon l'invention ;
[Fig. 3] la figure 3 est une vue schématique d'un organe de saisie du dispositif de pose selon l'invention ;
[Fig. 4] la figure 4 est un logigramme illustrant les étapes successives d'un procédé de pose selon l'invention ;
[Fig. 5] la figure 5 est une vue de la vitesse de déplacement VD de la ligne et de la charge axiale AL appliquée sur la ligne en fonction du temps par une série de patins de la bande sans fin, en entrée ou en sortie de l'organe de saisie, lors de la mise en oeuvre d'un procédé selon l'invention.

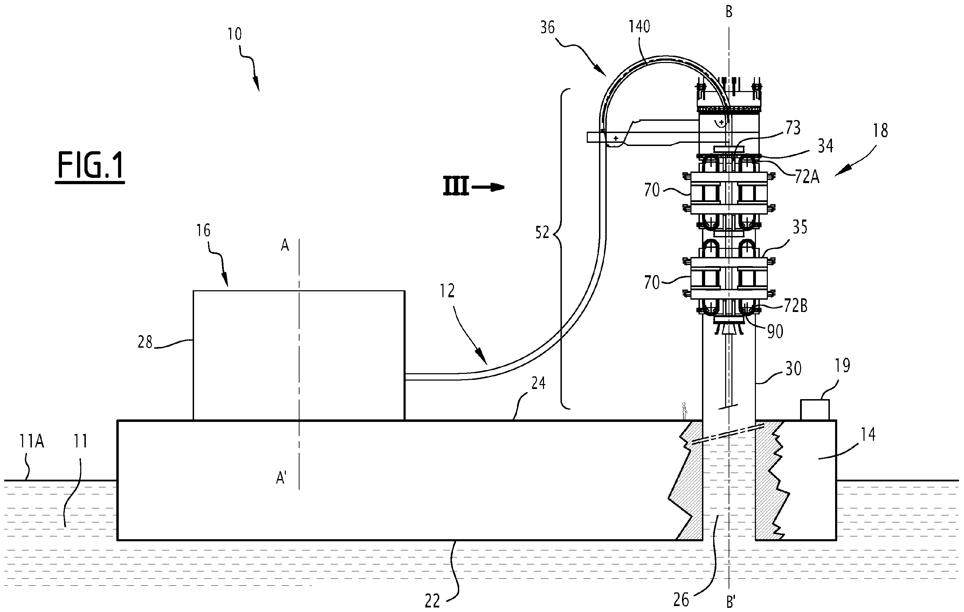

Un premier système 10 de pose ou/et de récupération d'une ligne 12 est représenté sur les Figures 1 à 3.

Dans cet exemple, le système 10 flotte sur une étendue d'eau 11 (visible sur la Figure 1) qui est par exemple une mer, un océan ou un lac. La profondeur de l'étendue d'eau 11 entre la surface 11A et le fond est supérieure à 5 mètres, et est notamment comprise entre 100 mètres et 4000 mètres.

Le système de pose 10 est destiné à la pose ou/et à la récupération d'une ligne 12 qui est avantageusement une ligne flexible, en particulier une conduite flexible.

La conduite flexible est notamment une conduite telle que décrite dans les documents normatifs publiés par l'American Petroleum Institute (API), API 17J, et API RP17B. La conduite est en variante un ombilical tel que décrit dans les documents normatifs publiés par l'American Petroleum Institute (API), API17E ou bien encore une conduite rigide déroulée telle que décrite dans le document normatif publié par le Det Norske Veritas et Germanischer Lloyd (DNV-GL), DNVGL-ST-F101 Edition 2017.

Cette définition englobe indifféremment les conduites flexibles de type non liées (« unbonded « en anglais), ou liées (« bonded » en anglais).

Plus généralement, et en variante, la ligne flexible 12 est un faisceau composite de type « bundle » comprenant au moins un tube de transport de fluide et un ensemble de câbles électriques ou optiques propres à transporter une puissance électrique ou hydraulique ou une information entre le fond et la surface de l'étendue d'eau.

En variante encore, la ligne flexible 12 est un ombilical sous-marin décrit dans le document normatif API 17E, ou un câble électrique de puissance.

Encore en variante, la ligne 12 est une conduite rigide décrite dans le document normatif DNVGL-ST-F101.

La ligne 12 peut porter des équipements, tels que des bouées, des connecteurs ou des équipements de fond qui présentent une étendue transversale supérieure à son étendue transversale moyenne.

En référence à la Figure 1, le système de pose ou/et de récupération 10 comporte une coque 14 flottant sur l'étendue d'eau 11, et un ensemble 16 de stockage de la ligne 12 sur la coque 14.

Il comporte un dispositif de pose ou/et de récupération 18 et une unité de commande 19, montés sur la coque 14.

La coque 14 est par exemple la coque d'un navire comprenant des moyens de propulsion. En variante, la coque 14 est formée par une plateforme flottant sur l'étendue d'eau 11, une barge, ou une barge semi-submersible.

La coque 14 s'étend entre une surface inférieure 22 immergée sous l'étendue d'eau 11 et un pont supérieur 24, à partir duquel le dispositif de pose ou/et de récupération 18 fait saillie.

Le pont 24 est avantageusement situé au-dessus la surface 11A de l'étendue d'eau 11. Dans cet exemple, la coque 14 délimite intérieurement, entre la surface inférieure 22 et la surface supérieure 24, un puits traversant central 26, visible sur la figure 1.

Le puits central 26 s'étend verticalement. Il débouche vers le haut sur le pont 24 et il débouche vers le bas dans l'étendue d'eau 11 à travers la surface inférieure 22.

Lorsque la ligne 12 est une conduite flexible, l'ensemble de stockage 16 est formé par un organe rotatif 28 de stockage de la conduite dans une configuration enroulée. L'organe rotatif 28 est par exemple un tambour avec un axe de rotation horizontal ou un panier avec un axe de rotation vertical.

L'ensemble de stockage 16 est disposé sur le pont 24 ou dans la coque 14.

La rotation de l'organe de stockage 28 dans un premier sens autour de son axe A-A' permet le déroulement d'une longueur croissante de ligne 12 vers le dispositif de pose 18, alors que la rotation dans un deuxième sens opposé au premier sens permet l'enroulement d'une longueur croissante de conduite sur l'organe de stockage 28.

Selon l'invention, le dispositif de pose 18 comporte une tour 30 d'axe vertical B-B', définissant un axe de tour, au moins un ensemble supérieur 34 de saisie et de déplacement de la ligne 12, et au moins un ensemble inférieur 35 de saisie et de déplacement de la ligne 12, les ensembles 34, 35 étant portés par la tour 30.

Le dispositif de pose 18 comporte en outre un ensemble 36 de guidage du déplacement de la ligne 12 entre l'ensemble de stockage 16 et les ensembles de saisie et de déplacement 34, 35.

Chaque ensemble 34, 35 comporte un châssis 70 de support et au moins deux organes de saisie à chenilles 72A, 72B, par exemple entre deux et six organes de saisie 72A, 72B, portés par le châssis 70.

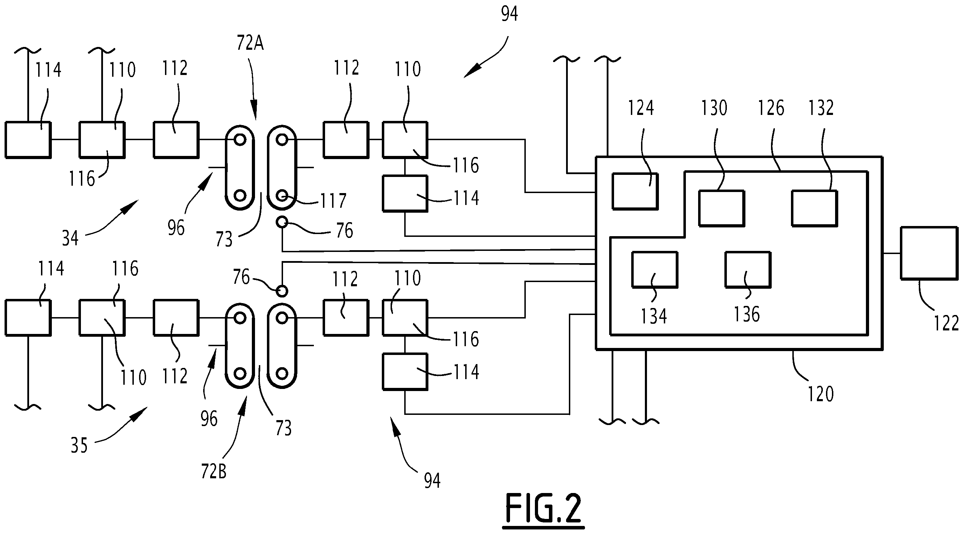

Chaque ensemble 34, 35 comporte en outre un capteur 76 de mesure d'une information représentative de la charge appliquée par la ligne 12 sur l'organe de saisie 72A, 72B (visibles sur la figure 2).

Chaque châssis 70 est propre à être déplacé entre une configuration ouverte de mise en place de la ligne 12 dans le châssis et une configuration fermée d'utilisation.

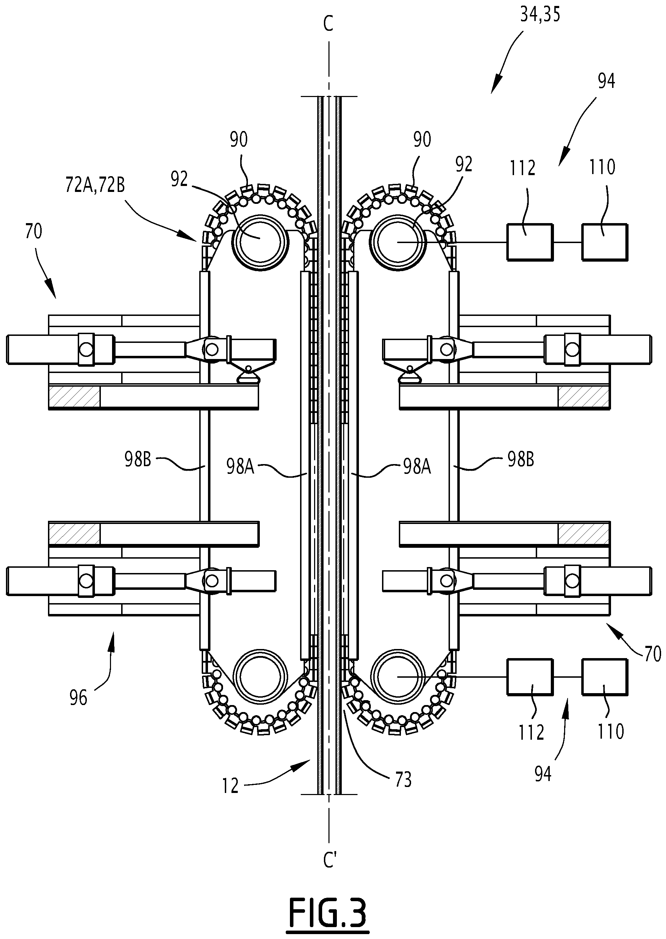

Dans la configuration fermée, en référence à la figure 3, chaque châssis 70 délimite un passage central 73 s'étendant verticalement le long d'un axe C-C' définissant un axe de pose de la ligne 12. Cet axe de pose C-C' est sensiblement parallèle à l'axe B-B' de la tour 30, c'est-à-dire totalement parallèle ou incliné d'un angle inférieur par exemple à 10° par rapport à l'axe B-B'.

En référence aux Figures 2 et 3, chaque châssis 70 porte avantageusement deux organes de saisie 72A, 72B disposés sensiblement parallèlement l'un par rapport à l'autre

Chaque organe de saisie 72A, 72B fait saillie dans le passage 73 vers l'axe C-C'.

L'organe de saisie 72A, 72B comporte un organe de déplacement 90, formé par une chenille de guidage destinée à saisir et déplacer la ligne 12, deux roues dentées 92, sur lesquelles est enroulé l'organe de déplacement 90, un dispositif 94 d'entraînement de l'organe de déplacement 90 le long de l'axe B-B', et un mécanisme 96 de déplacement radial de chaque organe de déplacement 90 vers l'axe B-B'.

L'organe de déplacement 90 présente sensiblement une forme de bande sans fin enroulée sur deux roues dentées 92. Elle présente ainsi une partie longitudinale 98A de guidage de la conduite et une partie longitudinale 98B de retour, destinées à s'étendre parallèlement à l'axe C-C' de pose.

L'organe de déplacement 90 comporte ici une pluralité de patins montés bout à bout pour former la bande sans fin.

La partie de guidage 98A est destinée à entrer en contact avec la surface périphérique extérieure de la ligne 12, le long d'une génératrice. Dans la configuration fermée les sections de guidage 98A opposées de deux organes de saisie 72 en regard se font face et sont propres à saisir respectivement deux sections angulaires opposées de la ligne 12 par rapport à l'axe C-C'.

Les roues dentées 92 sont mobiles en rotation autour d'un axe perpendiculaire à l'axe C-C'. Ils sont entraînés en rotation autour de leur axe par le dispositif 94, pour entraîner le déplacement des parties 98A, 98B parallèlement à l'axe C-C'.

En référence à la figure 2, chaque dispositif d'entraînement 94 comporte un moteur 110, pilotable par l'unité de commande 19, avantageusement un moto réducteur 112, raccordant le moteur 110 à au moins une roue dentée 92 et un frein mécanique 114 de blocage du moteur 110.

Le dispositif d'entraînement 94 comporte avantageusement un capteur 116 de mesure de couple appliqué par chaque moteur 110, et/ou un capteur 117 de mesure de vitesse de déplacement de la ligne 12.

Le moteur 110 est par exemple un moteur hydraulique ou un moteur électrique. Il est propre à engendrer un couple variable en fonction de la configuration souhaitée. Le couple variable est choisi parmi un couple de retenue de la ligne 12 dans une configuration immobile de la ligne 12, et un couple de déplacement de la ligne 12 à travers le passage central 73 dans une configuration de déplacement de la ligne 12.

Le frein mécanique 114 est également pilotable par l'unité de commande 19 entre une position désengagée, dans laquelle le moteur 110 est libre d'entrainer en rotation les roues dentées 92 et une position engagée dans laquelle il est apte à immobiliser le moteur 110 et/ou chaque roue dentée 92 pour retenir statiquement la ligne 12, même en l'absence de couple appliqué par le moteur 110.

Le mécanisme de déplacement radial 96 comporte par exemple au moins un vérin propre à déplacer radialement chaque organe de déplacement 90 vers l'axe de pose C-C', afin d'appliquer une force déterminée sur la surface périphérique extérieure de la ligne 12.

L'unité de commande 19 est représentée schématiquement sur les figures 1 et 2. Elle comporte par exemple un calculateur 120 et une interface homme-machine 122.

Le calculateur 120 comporte un processeur 124 et une mémoire 126 propre à contenir des modules logiciels fonctionnels destinés à être exécutés par le calculateur 124. En variante, les modules fonctionnels sont réalisés au moins partiellement sous forme de composants logiques programmables, ou encore sous forme de circuits intégrés dédiés.

Dans cet exemple, la mémoire 126 contient un module 130 d'activation sélectif de chaque moteur 110, un module 132 de régulation de chaque moteur 110 en vitesse ou en couple, raccordé à chaque capteur 116, 117, et avantageusement, un module 134 d'activation du frein mécanique 114.

Elle contient un module 136 de pilotage des modules 130, 132, 134 entre une configuration de repos, une configuration de pose ou/et de récupération de la ligne 12, et une configuration d'immobilisation de la ligne 12.

Dans la configuration de repos, le module d'activation 130 désactive chaque moteur 110 et le module d'activation 134 active au moins un frein mécanique 114.

Dans la configuration de pose ou/et de récupération, le module d'activation 134 désactive chaque frein mécanique 114. Le module d'activation 130 active chaque moteur 110 et le module de régulation 132 pilote chaque moteur 110 en couple, ou/et en vitesse sur la base des informations reçues d'au moins un capteur 116, 117 pour atteindre une vitesse de pose ou/et de récupération, supérieure à 2 m/heure, notamment comprise entre 2 m/heure et 2000 m/heure.

Dans la configuration de pose, avant de passer dans une configuration d'immobilisation de la ligne 12 dans au moins une position d'immobilisation, le module de pilotage 136 est propre à piloter le module de régulation 132 de chaque moteur 110 pour effectuer un dépassement limité 158 de la position d'immobilisation vers le bas, afin d'atteindre une position de changement de sens de déplacement, puis à effectuer une temporisation 160 dans la position de changement de sens de déplacement, dans laquelle la ligne 12 reste temporairement immobile, avant d'effectuer une remontée limitée 162 de la ligne 12 depuis la position de changement de sens de déplacement vers la position d'immobilisation.

Le dépassement limité 158 est de préférence d'au moins 0,5 m. Le dépassement limité 158 est avantageusement au plus de 10 m, par exemple au plus de 7 m, notamment au plus de 3 m, en particulier au plus d'1 m. Ce dépassement est généralement compris entre 0,5 m et 1 m.

Pour assurer un changement de sens de déplacement adéquat du sens de déplacement de la ligne 12, la temporisation 160 effectuée dans la position de changement de sens de déplacement, dans laquelle la ligne 12 reste immobile, dure de préférence au moins 0,5 secondes.

La temporisation 160 effectuée dans la position de changement de sens de déplacement dure avantageusement au plus 60 secondes, de préférence au plus 40 secondes, notamment au plus de 10 secondes et est généralement comprise entre 1 secondes et 5 secondes.

La remontée limitée de la ligne 12 depuis la position de changement de sens de déplacement permet d'atteindre la position d'immobilisation souhaitée pour la ligne 12, dans laquelle le module de pilotage 136 pilote les modules 130, 132, 134 dans la configuration d'immobilisation.

Préférentiellement, le module de pilotage 136 est propre à effectuer les étapes 158, 160, 162 précédemment décrites pour une pluralité d'immobilisations successives de la ligne 12 dans des positions d'immobilisations successives.

Dans ce cas, le procédé comporte, avant chaque immobilisation successive, les étapes de dépassement limité de chaque position d'immobilisation successive vers le bas pour atteindre une position de changement de sens de déplacement successive, la temporisation dans chaque position de changement de sens de déplacement successive, et la remontée limitée de la ligne 12 de chaque position de changement de sens de déplacement successive à la position d'arrêt successive.

Les étapes 158, 160, 162 sont mises en oeuvre de préférence pour toute immobilisation de la ligne 12 se produisant lorsque le poids pendu de la ligne 12 sous les organes de saisie 72A, 72B est supérieur à 50% de la capacité maximale de tenue des organes de saisie 72A, 72B, avec un réglage de serrage radial maximal des organes de saisie 72A, 72B en regard.

Ces réglages sont définis par le poids, le diamètre, et par les caractéristiques de résistance mécanique et structurelle de la ligne 12 à installer.

Dans ce dernier cas, les étapes 158, 160, 162 ne sont pas mises en oeuvre pour toute immobilisation de la ligne 12 se produisant entre le début de la pose et le moment ou le poids pendu atteint 50% de la capacité maximale.

En variante, ces étapes sont mises en oeuvre avant chaque arrêt successif de la ligne 12 dans une position d'immobilisation.

Avantageusement, dans la configuration d'immobilisation, le procédé décrit dans la demande française FR 18 74403 est mis en oeuvre.

Dans ce procédé, le module de pilotage 136 pilote les modules 132 et 134 pour réaliser une succession d'intervalles de maintien immobile de la ligne 12, dans laquelle les moteurs 110 d'au moins un organe de saisie supérieur 72A et d'au moins un organe de saisie inférieur 72B appliquent un couple de retenue sur la ligne 12 sans déplacement d'un organe de retenue 90 et d'intervalles de régulation de charge dans lequel un moteur 110 d'un organe de saisie supérieur 72A ou d'un organe de saisie supérieur 72B est actif pour engendrer un déplacement limité d'un organe de déplacement 90 d'un organe de saisie inférieur 72A ou/et d'un organe de saisie supérieur 72B ou une modification du couple de retenue appliqué sur un organe de déplacement 90 d'un organe de saisie inférieur 72A ou/et d'un organe de saisie supérieur 72B.

De préférence, le module de pilotage 136 mesure régulièrement une information représentative d'une différence entre la charge appliquée sur au moins un organe de saisie supérieur 72A et la charge appliquée sur au moins un organe de saisie inférieur 72B à l'aide des capteurs 76, et déplace un organe de déplacement 90 des organes de saisie inférieur 72B ou/et des organes de saisie supérieur 72A par le moteur 110, ou modifie le couple appliqué sur un organe de déplacement 90 des organes de saisie inférieur 72B ou/et des organes de saisie supérieur 72A par le moteur 110 en fonction de l'information représentative mesurée.

En particulier, si la différence de charge précitée atteint un seuil prédéterminé, le module de pilotage 136 active le moteur 110 d'un organe de saisie inférieur 72B pour déplacer un organe de déplacement 90 des organes de saisie inférieur 72B ou modifier le couple de retenue appliqué sur l'organe de déplacement 90 des organes de saisie inférieur 72B jusqu'à ce que la différence de charge mesurée soit inférieure ou égale au seuil prédéterminé.

L'interface homme-machine 122 comporte par exemple un organe de commande, notamment un joystick ou/et un écran tactile, et un afficheur pour permettre le basculement de l'unité de commande 19 entre la configuration de repos, la configuration de pose ou/et de récupération, et la configuration d'immobilisation de la ligne 12. Elle est propre à permettre à l'utilisateur de sélectionner une vitesse de pose ou/et de récupération de la ligne 12 dans la configuration de pose et/ou de récupération.

En référence à la figure 1, l'ensemble de guidage 34 comporte au moins une goulotte 140 de guidage courbée ou une roue disposée au-dessus de la tour 30 pour rediriger la ligne 12 prélevée de l'ensemble de stockage 16 dans l'axe de la tour 30.

La goulotte 140 présente sensiblement une forme de U tournée vers le bas définissant un rayon de courbure adéquat pour la ligne 12. Ce rayon de courbure est supérieur au rayon de courbure minimal (MBR) de la ligne 12.

Un procédé de pose de la ligne 12, mis en oeuvre à l'aide du système 10, va maintenant être décrit.

Initialement, la ligne 12 est stockée dans l'ensemble de stockage 16 en étant enroulée sur l'organe rotatif 28.

La ligne 12 conserve ainsi un rayon de courbure adéquat supérieur à son MBR.

Le système 10 est alors déplacé sur l'étendue d'eau 11 jusqu'à une région de pose dans laquelle la ligne 12 doit être déployée.

Les châssis 70 respectifs des ensembles de saisie et de déplacement 34, 35 sont ouverts au moins partiellement.

Une extrémité de la ligne 12 est alors amenée au contact de la goulotte 140 en l'engageant sur celle-ci.

Puis, un tronçon de ligne 12 est déployé successivement sur la goulotte 140, puis est descendu à travers chaque châssis 70 pour s'étendre verticalement le long de l'axe C-C'.

Ensuite, les châssis 70 sont passés dans leur position fermée.

Les mécanismes 96 de déplacement radial des organes de déplacement 90 sont alors activés pour appliquer chaque partie longitudinale de guidage 98A contre la surface périphérique extérieure de la ligne 12 suivant une génératrice de celle-ci.

Les mécanismes de déplacement radial 96 sont par ailleurs pilotés pour appliquer une pression prédéterminée sur la ligne 12.

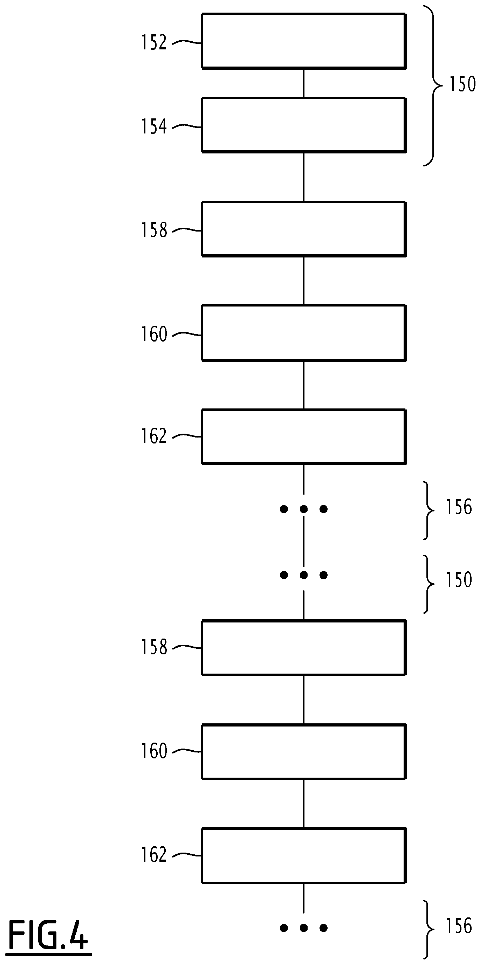

En référence à la figure 4, une phase 150 de pose est alors effectuée. Lors de cette phase 150, l'unité de commande 19 passe dans sa configuration de pose. Elle active les moteurs 110 à l'étape 152, et pilote les moteurs à l'étape 154 pour développer un couple de déplacement de l'organe de déplacement 90. Ceci engendre un mouvement continu vers le bas de la ligne 12 à travers les passages de circulation 73, régulé à une vitesse de déplacement supérieure à 2 m/heure, notamment comprise entre 2 m/heure et 2000 m/heure.

Le dispositif 94 d'entraînement en rotation des roues dentées 92 est activé. Les organes de déplacement 90 sont entraînés en mouvement, de sorte que chaque partie longitudinale 98A se déplace de haut en bas en entrainant la ligne 12. La ligne 12 est ainsi entraînée en translation vers le bas le long de l'axe de pose C-C' par les organes de déplacement 90 des organes de saisie 72A, 72B en regard de chaque ensemble 34, 35.

Une longueur croissante de ligne 12 peut ainsi être déployée, avec une tension contrôlée, par l'intermédiaire des ensembles de saisie et de guidage 34A, 34B.

Dans le procédé selon l'invention, illustré par la figure 4, lorsque la pose doit être interrompue, par exemple pour l'installation d'une bouée, pour une réparation de ligne, pour effectuer des activités sous l'eau, par exemple pour une connexion, ou pour un arrêt, une phase d'immobilisation 156 dans une position d'immobilisation est alors mise en oeuvre.

Dans ce cas, juste avant l'immobilisation de la ligne 12 dans la position d'immobilisation, le module de pilotage 136 commande le module de régulation 132 pour effectuer un dépassement limité 158 de la position d'immobilisation vers le bas pour atteindre une position de changement de sens de déplacement.

Comme indiqué plus haut, ce dépassement limité est de préférence d'au moins 0,5 m. Le dépassement limité 158 est avantageusement au plus de 10 m, par exemple au plus de 7 m, notamment au plus de 3 m, en particulier au plus d'1 m. Ce dépassement est généralement compris entre 0,5 m et 1 m.

Puis, une temporisation 160 est effectuée dans la position de changement de sens de déplacement. Lors de cette temporisation, la ligne 12 s'immobilise temporairement dans la position de changement de sens de déplacement.

Pour assurer un changement de sens de déplacement adéquat du sens de déplacement de la ligne 12, la temporisation 160 effectuée dans la position de changement de sens de déplacement, dans laquelle la ligne 12 reste immobile, dure de préférence au moins 0,5 secondes.

La temporisation 160 effectuée dans la position de changement de sens de déplacement dure avantageusement au plus 60 secondes, de préférence au plus 40 secondes, notamment au plus 10 secondes et est généralement comprise entre 1 secondes et 5 secondes.

Une fois la temporisation effectuée, le procédé comporte une remontée 162 limitée de la ligne 12 depuis la position de changement de sens de déplacement vers la position d'immobilisation. Cette remontée est effectuée sur la distance de dépassement précitée et la ligne 12 est alors immobilisée dans la position d'immobilisation.

Les opérations à effectuer sur la ligne ou sur l'installation peuvent alors être mises en oeuvre.

Ensuite, une nouvelle phase de pose 150 de la ligne 12 est démarrée, comme décrit précédemment, et d'autres immobilisations 156 de la ligne 12, telles que décrites plus haut.

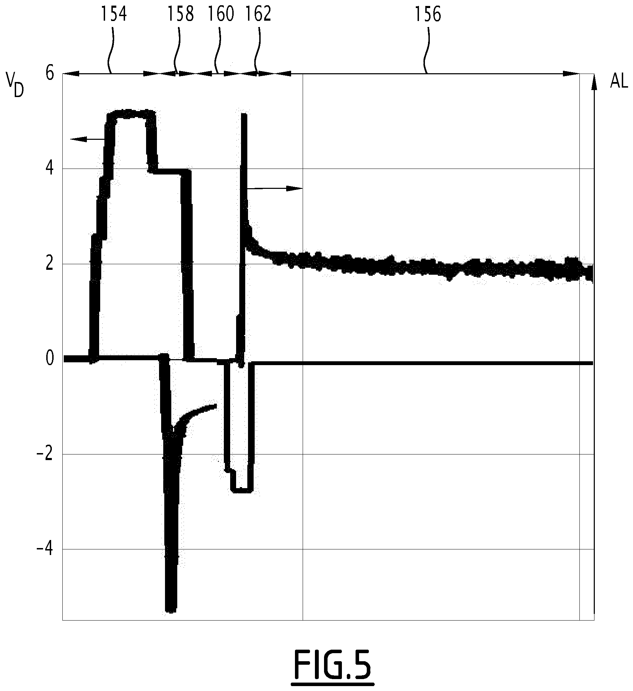

Comme illustré par la figure 5, la charge axiale appliquée par une série de patins s'appliquant au bas de chaque organe de saisie 72A, 72B, et en particulier sur l'organe de saisie inférieur 72B au moment de l'arrêt de la ligne 12 (fin de l'étape 158) dans la position de changement de sens de déplacement est importante. Cette charge axiale est dirigée vers le bas.

Si la ligne 12 était immobilisée dans cette position, ceci pourrait conduire à une mauvaise saisie de la ligne 12 par les organes de saisie 72A, 72B, et éventuellement à un glissement de la ligne 12 ou d'une des couches de la ligne 12 si la capacité des organes de saisie 72A, 72B n'est pas suffisante.

Comme illustré par la figure 5, la remontée limitée 162 de la ligne jusqu'à la position d'immobilisation entraîne une inversion totale du sens de la charge s'appliquant sur les organes de saisie 72A, 72B lorsque ceux-ci sont définitivement immobilisés dans la position d'immobilisation.

Ainsi, la ligne 12 est immobilisée de manière stable dans les organes de saisie 72A, 72B, ce qui évite les phénomènes non souhaités décrits plus haut. De ce fait, les organes de saisie 72A, 72B n'ont pas à être surdimensionnés et peuvent être utilisés pour une capacité de pose supérieure, augmentant la masse de la ligne 12 pouvant être posée à l'aide du système de pose 10 selon l'invention.

Ceci est obtenu de manière très simple, par un pilotage avantageux de la pose de la ligne 12.

Eventuellement, une fois la ligne immobilisée, un procédé de stabilisation, tel que décrit dans la demande de brevet FR 18 74403 est mis en oeuvre pour diminuer la différence de charge pouvant être observée entre l'organe de saisie supérieur 72A et l'organe de saisie inférieur 72B.

Dans une variante (non représentée), la ligne 12 est récupérée à l'aide du système 10 selon l'invention. Avantageusement, dans la configuration de récupération, avant le passage dans la configuration d'immobilisation, le module de pilotage 136 est propre à piloter le module de régulation 132 pour effectuer un dépassement limité de la position d'immobilisation vers le haut pour atteindre une position de changement de sens de déplacement, puis une temporisation dans la position de changement de sens de déplacement, avant une descente limitée de la ligne 12 de la position de changement de sens de déplacement à la position d'immobilisation.

Le dépassement limité 158 est de préférence d'au moins 0,5 m. Le dépassement limité 158 est avantageusement au plus de 10 m, par exemple au plus de 7 m, notamment au plus de 3 m, en particulier au plus d'1 m. Ce dépassement est généralement compris entre 0,5 m et 1 m..

Pour assurer un changement de sens de déplacement adéquat du sens de déplacement de la ligne 12, la temporisation 160 effectuée dans la position de changement de sens de déplacement, dans laquelle la ligne 12 reste immobile, dure de préférence au moins 0.5 secondes.

La temporisation 160 effectuée dans la position de changement de sens de déplacement dure avantageusement au plus 60 secondes, de préférence au plus 40 secondes, notamment au plus 10 secondes et est généralement comprise entre 1 secondes et 5 secondes.

Dans le procédé décrit sur les figures 1 à 5, les organes de saisie 72A supérieurs sont situés au-dessus des organes de saisie 72B inférieurs. En configuration de pose de la ligne 12, les organes de saisie 72A sont donc des organes de saisie amont 72A, et les organes de saisie 72B sont des organes de saisie aval 72B par rapport au sens de déplacement de la ligne.

Dans une variante (non représentée) avec un système de pose horizontal, les organes de saisie amont 72A ne sont pas nécessairement positionnés au-dessus des organes de saisie aval 72B.

## Revendications

1. Procédé de pose ou/et de récupération d'une ligne (12), dans une étendue d'eau (11), comprenant les étapes suivantes :
- fourniture d'un dispositif de pose (18) comprenant au moins deux organes de saisie amont (72A) en regard et au moins deux organes de saisie aval (72B) en regard, les organes de saisie (72A ; 72B) en regard définissant un passage (73) de circulation de la ligne (12) dans lequel la ligne (12) est localement enserrée ; chaque organe de saisie (72A ; 72B) comprenant un organe de déplacement (90) de la ligne (12) et au moins un moteur (110) de mise en mouvement de l'organe de déplacement (90) activable pour développer un couple de déplacement de la ligne (12) ; le dispositif de pose (18) comprenant une unité (19) de commande de chaque moteur (110), le procédé comportant les étapes suivantes :
- descente de la ligne (12) jusqu'à des positions d'immobilisation successives ;
- immobilisation successive de la ligne (12) dans chaque position d'immobilisation successive;
**caractérisé par** les étapes suivantes, effectuées avant chaque immobilisation successive de la ligne dans une position d'immobilisation successive :
- dépassement limité d'au moins 0,5 m de la position d'immobilisation successive vers le bas pour atteindre une position de changement de sens de déplacement successive;
- temporisation dans la position de changement de sens de déplacement successive ;
- remontée limitée de la ligne (12) de la position de changement de sens de déplacement successive à la position d'immobilisation successive.

2. Procédé selon la revendication 1, dans lequel le dépassement limité de chaque position d'immobilisation successive est d'au plus 10 m, notamment d'au plus 3 m, en particulier d'au plus 1 m.

3. Procédé selon l'une quelconque des revendications précédentes, dans lequel la temporisation dans chaque position de changement de sens de déplacement successive est d'au plus 60 s, de préférence d'au plus 40 s, notamment d'au plus 10 s.

4. Procédé selon l'une quelconque des revendications précédentes, dans lequel la temporisation dans chaque position de changement de sens de déplacement successif est d'au moins 0,5 s.

5. Procédé selon l'une quelconque des revendications précédentes, dans lequel les étapes de dépassement limité de la position d'immobilisation successive vers le bas pour atteindre une position de changement de sens de déplacement successive, de temporisation dans la position de changement de sens de déplacement successive, et de remontée limitée de la ligne (12) de la position de changement de sens de déplacement successive à la position d'immobilisation successive sont mises en oeuvre lorsque le poids pendu de la ligne (12) est supérieur à 50% de la capacité maximale de tenue des organes de saisie (72A, 72B).

6. Procédé selon l'une quelconque des revendications précédentes, comprenant après l'immobilisation de la ligne (12) dans chaque position d'immobilisation successive, les étapes suivantes :
- activation du moteur d'au moins un organe de saisie amont (72A) ou/et d'au moins un organe de saisie aval (72B) par l'unité de commande (19), pour appliquer sur l'organe de déplacement des organes de saisie amont (72A) ou/et des organes de saisie aval (72B), un couple de retenue de la ligne (12) à l'encontre de son poids par la paire d'organes de saisie amont (72A) ou/et par la paire d'organes de saisie aval (72B),
- pilotage au moins ponctuel par l'unité de commande (19) d'au moins un moteur (110) d'un organe de saisie amont (72A) ou/et d'un organe de saisie aval (72B) pour engendrer un déplacement d'un organe de déplacement (90) des organes de saisie amont (72A) ou/et des organes de saisie aval (72B) ou pour modifier le couple de retenue appliqué sur l'organe de déplacement (90) des organes de saisie amont (72A) ou/et des organes de saisie aval (72B) sans déplacement de l'organe de déplacement (90) des organes de saisie amont (72A) ou/et des organes de saisie aval (72B).

7. Procédé selon l'une quelconque des revendications précédentes, dans lequel après l'immobilisation de la ligne (12) dans chaque position d'immobilisation successive, le procédé comporte l'installation d'une bouée autour de la ligne (12), une réparation ponctuelle sur la ligne (12), une opération sous-marine en rapport avec la ligne (12) en particulier une connexion/déconnexion, ou une intervention de véhicule sous-marin téléguidé
ou/et une mise en attente de la pose, liée à la météorologie ou/et à des contraintes imposées par une installation avoisinante.

8. Procédé selon l'une quelconque des revendications précédentes, comprenant les étapes suivantes :
- remontée de la ligne (12) jusqu'à au moins une position d'immobilisation ;
- immobilisation de la ligne (12) dans la ou dans chaque position d'immobilisation ;
le procédé comprenant, avant la ou chaque immobilisation de la ligne (12) dans la position d'immobilisation :
- dépassement limité de la position d'immobilisation vers le haut pour atteindre une position de changement de sens de déplacement ;
- temporisation dans la position de changement de sens de déplacement ;
- descente limitée de la ligne (12) de la position de changement de sens de déplacement à la position d'immobilisation.

## Patentansprüche

1. Verfahren zum Verlegen oder/und Einholen einer Leitung (12) in einem Gewässer (11), welches die folgenden Schritte umfasst:
- Bereitstellung einer Verlegevorrichtung (18), die mindestens zwei gegenüberliegende stromaufwärtige Greiforgane (72A) und mindestens zwei gegenüberliegende stromabwärtige Greiforgane (72B) umfasst, wobei die gegenüberliegenden Greiforgane (72A; 72B) einen Durchgang (73) für den Umlauf der Leitung (12) definieren, in dem die Leitung (12) lokal eingeklemmt ist; wobei jedes Greiforgan (72A; 72B) ein Organ (90) zum Verschieben der Leitung (12) umfasst und mindestens einen Motor (110) zum Bewegen des Verschiebungsorgans (90), der aktiviert werden kann, um ein Drehmoment zum Verschieben der Leitung (12) zu erzeugen, wobei die Verlegevorrichtung (18) eine Steuereinheit (19) für jeden Motor (110) umfasst, wobei das Verfahren die folgenden Schritte umfasst:
- Absenken der Leitung (12) in aufeinanderfolgende Immobilisierungpositionen;
- sukzessive Immobilisierung der Leitung (12) in jeder Position der sukzessiven Immobilisierung;
**gekennzeichnet durch** die folgenden Schritte, die vor jeder sukzessiven Immobilisierung der Leitung in einer Position der sukzessiven Immobilisierung durchgeführt werden:
- begrenztes Überschreiten von mindestens 0,5 m aus der Position der sukzessiven Immobilisierung nach unten, um eine Position für den sukzessiven Wechsel der Bewegungsrichtung zu erreichen;
- Verzögerungszeit in der sukzessiven Wechselposition;
- begrenztes Anheben der Leitung (12) aus der Position des sukzessiven Richtungswechsels in die Position der sukzessiven Immobilisierung.

2. Verfahren nach Anspruch 1, bei dem die begrenzte Überschreitung jeder Position der sukzessiven Immobilisierung höchstens 10 m, vorzugsweise höchstens 3 m, insbesondere höchstens 1 m beträgt.

3. Verfahren nach einem der vorhergehenden Ansprüche, wobei die Verzögerungszeit in jeder Position des sukzessiven Richtungswechsels höchstens 60 s, vorzugsweise höchstens 40 s, insbesondere höchstens 10 s beträgt.

4. Verfahren nach einem der vorhergehenden Ansprüche, wobei die Verzögerungszeit in jeder Position, in der die Bewegungsrichtung sukzessive geändert wird, mindestens 0,5 s beträgt.

5. Verfahren nach einem der vorhergehenden Ansprüche, in dem die Schritte des begrenztes Überschreitens der Position der sukzessiven Immobilisierung nach unten, um eine Position der sukzessiven Richtungsänderung zu erreichen, der Verzögerung in der Richtungsänderung und begrenztes Anheben der Leitung (12) aus der Position der sukzessiven Änderung der Bewegungsrichtung in die Position der sukzessiven Immobilisierung durchgeführt werden, wenn das hängende Gewicht der Leitung (12) mehr als 50% der maximalen Haltekapazität der Greiforgane (72A, 72B) beträgt.

6. Verfahren nach einem der vorhergehenden Ansprüche, das nach der Immobilisierung der Leitung (12) in jeder Position der sukzessiven Immobilisierung die folgenden Schritte umfasst:
- Aktivieren des Motors von mindestens einem stromaufwärtigen Greiforgan (72A) und/oder mindestens einem stromabwärtigen Greiforgan (72B) durch die Steuereinheit (19), um auf das Bewegungselement des stromaufwärtigen Greiforgans (72A) und/oder des stromabwärtigen Greiforgans (72B) ein Rückhaltemoment der Leitung (12) gegen ihr Gewicht durch das Paar stromaufwärtiger Greiforgane (72A) oder/und durch das Paar stromabwärtiger Greiforgane (72B) zu übertragen,
- zumindest punktuelles Ansteuern mindestens eines Motors (110) eines stromaufwärtigen Greiforgans (72A) und/oder eines stromabwärtigen Greiforgans (72B) durch die Steuereinheit (19), um eine Bewegung eines Bewegungselements (90) der stromaufwärtigen Greiforgane (72A) und/oder der stromabwärtigen Greiforgane (72B) zu erzeugen oder um das auf das Bewegungselement (90) des stromaufwärtigen Greiforgans (72A) oder/und des stromabwärtigen Greiforgans (72B) ausgeübte Rückhaltemoment ohne Bewegung des Bewegungselements (90) des stromaufwärtigen Greiforgans (72A) oder/und des stromabwärtigen Greiforgans (72B) zu verändern.

7. Verfahren nach einem der vorhergehenden Ansprüche, wobei das Verfahren nach der Immobilisierung der Leitung (12) in jeder Position der sukzessiven Immobilisierung das Setzen einer Boje um die Leitung (12) herum, eine punktuelle Reparatur an der Leitung (12), eine Unterwasseroperation in Verbindung mit der Leitung (12), insbesondere eine Verbindung/Trennung, oder einen Eingriff durch ein ferngesteuertes Unterwasserfahrzeug umfasst
oder/und eine wetterbedingte Wartezeit für die Verlegung oder/und Einschränkungen durch eine benachbarte Einrichtung.

8. System nach einem der vorherigen Ansprüche, ferner umfassend die folgenden Schritte:
- Anheben der Leitung (12) bis zu mindestens einer Immobilisierungsposition;
- Immobilisierung der Leitung (12) in der oder jeder Immobilisierungsposition;
wobei das Verfahren vor der oder jede Fixierung der Leitung (12) in der Fixierungsposition umfasst:
- begrenztes Überschreiten der Immobilisierungsposition nach oben, um eine Position für den Wechsel der Bewegungsrichtung zu erreichen;
- Verzögerungszeit in der Position für den Wechsel der Bewegungsrichtung;
- begrenztes Absenken der Leitung (12) von der Position, in der die Bewegungsrichtung gewechselt wird, in die Position, in der die Bewegung zum Stillstand kommt.

## Claims

1. A method for laying and/or recovering a line (12) in a body of water (11), comprising the following steps:
- providing a laying device (18) comprising at least two upstream gripping members (72A) facing each other and at least two downstream gripping members (72B) facing each other, the gripping members facing each other (72A; 72B) defining a line (12) circulation passage (73) in which the line (12) is locally gripped; each gripping member (72A; 72B) comprising a line (12) movement member (90) and at least one motor (110) for setting the movement member (90) in motion that can be activated to deliver a line (12) movement torque; the laying device (18) comprising a control unit (19) for each motor (110), the method comprising the following steps:
- lowering the line (12) to successive stop positions;
- successive stopping of the line (12) in each successive stop position;
**characterised by** the following steps, carried out prior to each successive stopping of the line in a successive stop position:
- limited downward overrun of at least 0.5m past the successive stop position to reach a successive change of direction position;
- time delay in the successive change of direction position;
- limited raising of the line (12) from the successive change of direction position to the successive stop position.

2. The method according to claim 1, wherein the limited overrun past each successive stop position is at most 10 m, in particular at most 3 m, in particular at most 1 m.

3. The method according to any one of the preceding claims, wherein the time delay in each successive change of direction position is at most 60 s, preferably at most 40 s, in particular at most 10 s.

4. The method according to any one of the preceding claims, wherein the time delay in each successive change of direction position is at least 0.5 s.

5. The method according to any one of the preceding claims, wherein the steps of limited downward overrun past the successive stop position to reach a successive change of direction position, time delay in the successive change of direction position, and limited upward raising of the line (12) from the successive change of direction position to the successive stop position are implemented when the hanging weight of the line (12) is greater than 50% of the maximum holding capacity of the gripping members (72A, 72B).

6. The method according to any one of the preceding claims, comprising after the line (12) has stopped in each successive stop position, the following steps:
- activating the motor of at least one upstream gripping member (72A) and/or at least one downstream gripping member (72B) by the control unit (19), in order to apply to the movement member of the upstream gripping members (72A) and/or of the downstream gripping members (72B), a torque for retaining the line (12) against its weight by the pair of upstream gripping members (72A) and/or by the pair of downstream gripping members (72B),
- at least occasionally controlling, by the control unit (19), at least one motor (110) of an upstream gripping member (72A) and/or of a downstream gripping member (72B) in order to produce a movement of a movement member (90) of the upstream gripping members (72A) and/or of the downstream gripping members (72B) or to change the retaining torque applied to the movement member (90) of the upstream gripping members (72A) and/or the downstream gripping members (72B) without moving the movement member (90) of the upstream gripping members (72A) and/or of the downstream gripping members (72B).

7. The method according to any one of the preceding claims, wherein after the line (12) has been stopped in each stop position, the method comprises the installation of a buoy around the line (12), a spot repair on the line (12), an underwater operation in relation to the line (12), in particular a connection/disconnection, or an underwater remotely operated vehicle intervention
and/or a postponement of the laying, due to the weather and/or to constraints imposed by a neighbouring facility.

8. The method according to any of the preceding claims, comprising the following steps:
- raising the line (12) to at least one stop position;
- stopping the line (12) in the or each stop position;
the method comprising, prior to the or each stopping of the line (12) in the stop position:
- limited upward overrun past the stop position to a change of direction position;
- time delay in the change of direction position;
- limited lowering of the line (12) from the change of direction position to the stop position.
